# EUROPEAN PATENT APPLICATION

(11) **EP 4 642 168 A1**
(43) Date of publication of application: **29.10.2025**
(21) Application number: 25162397.1
(22) Date of filing: 07.03.2025
(51) Int. Cl.: H05B 47/105, H05B 47/155, H05B 47/175, A01G 7/04, A01G 9/24, G06Q 50/02

(54) **SYSTEMS AND METHODS FOR GENERATING OBJECTIVES-BASED LIGHT RECIPES**

(30) Priority: 08.03.2024 US 202463562926 P
(71) Applicant: Sollum Technologies Inc., Montréal, Québec H3C 3X6 (CA)
(72) Inventor: SÉGUIN, Rose, MONTREAL, H3C 3X6 (CA); POIRIER, Jacques, MONTREAL, H3C 3X6 (CA); ROY-MOISAN, François, MONTREAL, H3C 3X6 (CA); ARSENEAULT, Léandre, MONTREAL, H3C 3X6 (CA); BÉLANGER, Jonathan, MONTREAL, H3C 3X6 (CA); TREMBLAY, Marc, MONTREAL, H3C 3X6 (CA)
(74) Representative: Vanzini, Christian

(57) **Abstract**

There are provided techniques, including systems and methods, for adjusting illumination conditions provided by a pool of light sources (22). The adjustments made to the illumination conditions are based on one or more objectives, hence enabling the possibility of generating objectives-based light recipes or scenarios. The system (20) is connectable to the pool of light sources through appropriate components and protocols. The system includes a light scenario generation module (24), a rendering module (26), and a user interface (28), and the method is implemented using these components.

## Description

### TECHNICAL FIELD

The present techniques generally relate to lighting in the context of industrial agricultural applications such as, for example, greenhouse, controlled environment agriculture (CEA), livestock rearing, and the like.

### BACKGROUND

Artificial lighting is used in horticulture to address several challenges of the industry, such as the complex task of managing illumination conditions provided by natural sunlight for optimal plant growth during specific periods of the year. Supplemental artificial lighting provides additional light and energy to support or assist photosynthesis and growth, or other horticultural objectives.

There is a need for techniques, which may include systems, devices and methods that address or alleviate at least some of the challenges presented above.

### SUMMARY

In accordance with one aspect, there is provided a system for adjusting illumination conditions provided by a pool of light sources irradiating targets. The system includes a light scenario generation module configured to receive a first set of inputs, the first set of inputs including at least one light scenario objective and a light capabilities profile for each light source of the pool of light sources and provide a light scenario as an output; a rendering module operatively connected to the pool of light sources and the light scenario generation module, the rendering module being configured to receive a second set of inputs, the second set of inputs including the light scenario and the light capabilities profile for each light source of the pool of light sources and send illumination instructions to each light source of the pool of light sources to adjust the illumination conditions provided by the pool of light sources, based on said at least one light scenario objective; and a user interface configured to provide said at least one light scenario objective to the light scenario generation module.

In some embodiments, the pool of light sources includes different families of artificial light sources, at least one family of artificial light sources having different optical capabilities than at least one other family of artificial light sources.

In some embodiments, the at least one light scenario objective includes at least one of: a photobiological response of primary targets objective and a photobiological response of secondary targets objective.

In some embodiments, the at least one light scenario objective includes at least one specific objective, the at least one specific objective being associated with optical properties and including at least one of: photoperiod duration, intensity, illuminance, luminance, photosynthetic photon flux density, daily light integral, spectral composition, color rendering index (CRI), correlated color temperature (CCT) and/or geo-localized based properties.

In some embodiments, the at least one light scenario objective includes at least one adjoining objective, the at least one adjoining objective including at least one of: energy management, energy usage management, carbon emissions management, light pollution management and/or lamp lifetime management.

In some embodiments, the at least one light scenario objective includes a plurality of light scenario objectives, the light scenario module being configured for processing data relative to an individual weight of each of the light scenario objectives; and once the data has been processed, ranking the plurality of light scenario objectives to prioritize a given objective instead of the others.

In some embodiments, ranking the plurality of light scenario objectives is based on an emergency level of the given objective.

In some embodiments, the user interface is configured to provide a matching score between the at least one light scenario objective and the illumination conditions provided by the pool of light sources, the matching score being an indication of an achievement of the at least one light scenario objective.

In some embodiments, the targets include crops, plants and/or livestock.

In accordance with one aspect, there is provided a method for adjusting illumination conditions provided by a pool of light sources irradiating targets. The method includes providing, with a user interface, at least one light scenario objective; receiving, with a light scenario generation module, a first set of inputs, the first set of inputs including said at least one light scenario objective and a light capabilities profile for each light source of the pool of light sources; providing a light scenario with the light scenario generation module; receiving, with a rendering module, a second set of inputs, the second set of inputs including the light scenario and the light capabilities profile for each light source of the pool of light sources; and sending, with the rendering module, illumination instructions to each light source of the pool of light sources to adjust the illumination conditions provided by the pool of light sources, based on said at least one light scenario objective.

In some embodiments, the pool of light sources includes different families of artificial light sources, at least one family of artificial light sources having different optical capabilities than at least one other family of artificial light sources.

In some embodiments, the at least one light scenario objective includes at least one of: a photobiological response of primary targets objective and a photobiological response of secondary targets objective.

In some embodiments, the at least one light scenario objective includes at least one specific objective, the at least one specific objective being associated with optical properties of the light and including at least one of: photoperiod duration, intensity, illuminance, luminance, photosynthetic photon flux density, daily light integral, spectral composition, color rendering index (CRI), correlated color temperature (CCT) and/or geo-localized based properties.

In some embodiments, the at least one light scenario objective includes at least one adjoining objective, the at least one adjoining objective including at least one of: energy management, energy usage management, carbon emissions management, light pollution management and/or lamp lifetime management.

In some embodiments, the at least one light scenario objective includes a plurality of light scenario objectives, the method including processing data relative to an individual weight of each of the light scenario objectives; and once the data has been processed, ranking the plurality of light scenario objectives to prioritize a given objective instead of the others.

In some embodiments, ranking the plurality of light scenario objectives is based on an emergency level of the given objective.

In some embodiments, the method further includes providing a matching score between the at least one light scenario objective and the illumination conditions provided by the pool of light sources, the matching score being an indication of an achievement of the at least one light scenario objective.

In some embodiments, the targets include crops, plants and/or livestock.

In accordance with another aspect, there is provided a non-transitory computer readable storage medium having stored thereon computer executable instructions that, when executed by a processor, cause the processor to perform the methods herein disclosed, or at least one step of the methods.

Other features and advantages of the method and system described herein will be better understood upon a reading of preferred embodiments thereof with reference to the appended drawings. Although specific features described in the above summary and in the detailed description below may be described with respect to specific embodiments or aspects, it should be noted that these specific features can be combined with one another unless stated otherwise.

### BRIEF DESCRIPTION OF THE DRAWINGS

Figure 1 shows a system for adjusting illumination conditions provided by a pool of light sources irradiating targets, in accordance with one embodiment.
Figure 2 shows a system for adjusting illumination conditions provided by a pool of light sources irradiating targets, in accordance with one embodiment.
Figure 3 illustrates a circuit connecting light sources forming the pool of light sources, in accordance with one embodiment.
Figure 4 illustrates a circuit connecting light sources forming the pool of light sources, in accordance with one embodiment.
Figure 5 shows a user interface ready to be configured by a user.
Figure 6 shows a step of determining a photoperiod in the user interface of Figure 5.
Figure 7 illustrates how the user interface of Figure 5 changes after the selection of the duration of the photoperiod.
Figure 8 shows a step of determining an input color ratio in the user interface of Figure 5.
Figure 9 illustrates how the user interface displays the relative energy for the determined photoperiod.
Figure 10 shows a step of determining a photoperiod in the user interface.
Figure 11 illustrates how the user interface displays fading of the photoperiod.
Figure 12 shows a step of providing a phytophthora capsici infection treatment in the user interface.
Figure 13 illustrates how the user interface displays the treatment of Figure 12.
Figure 14 to 17 show a step of including power optimization objectives when building the objectives-based light recipe.
Figure 18 shows a system for adjusting illumination conditions provided by a pool of light sources irradiating targets, in accordance with one embodiment.
Figures 19 to 21 are representative of a scenario in which an agronomist needs to define a new light scenario.
Figures 22 to 24 are representative of a scenario in which a new light scenario is defined for the management of animals.

### DETAILED DESCRIPTION

In the present description, similar features in the drawings have been given similar reference numerals. To avoid cluttering certain figures, some elements may not have been indicated if they were already identified in a preceding figure. It should also be understood that the elements of the drawings are not necessarily depicted to scale, since emphasis is placed on clearly illustrating the elements and structures of the present embodiments. Furthermore, positional descriptors indicating the location and/or orientation of one element with respect to another element are used herein for ease and clarity of description. Unless otherwise indicated, these positional descriptors should be taken in the context of the figures and should not be considered limiting. More particularly, it will be understood that such spatially relative terms are intended to encompass different orientations in the use or operation of the present embodiments, in addition to the orientations exemplified in the figures.

The terms "a", "an" and "one" are defined herein to mean "at least one", that is, these terms do not exclude a plural number of items, unless stated otherwise.

Terms such as "substantially", "generally" and "about", that modify a value, condition or characteristic of a feature of an exemplary embodiment, should be understood to mean that the value, condition or characteristic is defined within tolerances that are acceptable for the proper operation of this exemplary embodiment for its intended application.

Unless stated otherwise, the terms "connected" and "coupled", and derivatives and variants thereof, refer herein to any structural or functional connection or coupling, either direct or indirect, between two or more elements. For example, the connection or coupling between the elements may be acoustical, mechanical, optical, electrical, thermal, logical, or any combinations thereof.

The terms "match", "matching" and "matched" are intended to refer herein to a condition in which two elements are either the same or within some predetermined tolerance of each other. That is, these terms are meant to encompass not only "exactly" or "identically" matching the two elements but also "substantially", "approximately" or "subjectively" matching the two elements, as well as providing a higher or best match among a plurality of matching possibilities.

In the present description, the expression "based on" is intended to mean "based at least partly on", that is, this expression can mean "based solely on" or "based partially on", and so should not be interpreted in a limited manner. More particularly, the expression "based on" could also be understood as meaning "depending on", "representative of", "indicative of", "associated with" or similar expressions.

The expression "light", synonyms and derivatives thereof will be used throughout the present disclosure, and refers to the use of optical techniques, systems, and methods for assisting, maintaining, stimulating and/or optimizing of a living organism. Non-limiting examples of artificial light sources include incandescent light sources, fluorescent light sources, high-intensity discharge (HID) light sources such as mercury vapor, metal halide (MH), high-pressure sodium (HPS) and low-pressure sodium (LPS) light sources, solid-state light sources including LED light sources, and laser sources. The light is associated with an illumination spectrum or profile. The expression "illumination spectrum" is used to broadly refer to the spectral power distribution of an illumination. The illumination spectrum can represent the distribution of power radiated per unit area and per unit wavelength or frequency over a spectral region of the electromagnetic spectrum. It should be noted that using light may be used to irradiate or illuminate living organisms in a horticultural structure providing regulated climatic conditions. Nonlimitative examples of horticultural structures include greenhouse, glasshouse, hothouse and many other controlled environments.

In the present description, the terms "light" and "optical", and variants and derivatives thereof, are used to refer to radiation in any appropriate region of the electromagnetic spectrum. The terms "light" and "optical" are therefore not limited to visible light, but can also include, without being limited to, the infrared and ultraviolet regions. For example, in some implementations, the present techniques can be used with electromagnetic signals having wavelengths ranging from about 250 nm to about 2500 nm. However, this range is provided for illustrative purposes only and some implementations of the present techniques may operate outside this range. Also, the skilled person will appreciate that the definition of the ultraviolet, visible and infrared ranges in terms of spectral ranges, as well as the dividing lines between them, can vary depending on the technical field or the definitions under consideration, and are not meant to limit the scope of applications of the present techniques.

The expressions "natural light" or "natural light conditions" generally refer to light having spectral characteristics corresponding or similar to those of sunlight, moonlight or starlight. The spectral profile of natural light, particularly sunlight, varies as a function of geographic location, time of day, time of year, weather, cloud coverage, and several other factors. Several standards are known in the art to provide a spectral reference for natural light. For example, the Commission internationale de l'eclairage (CIE) has established the D series of well-defined daylight standard illuminants representing natural light under different conditions. One well-known standard is CIE Standard Illuminant D65, which is a daylight illuminant that intends to represent the average midday light in Western or Northern Europe. Other examples of CIE Standard Illuminants for daylight include the D50, D55, and D75 standard illuminants. Sunlight, which refers to the total spectrum of electromagnetic radiation emitted by the Sun and reaching the Earth, has a broad spectral range including ultraviolet radiation, visible light, and infrared radiation. Accordingly, standard illuminants extend within the solar radiation spectrum. For example, Standard Illuminant D65 extends from 300 nm to 830 nm. Non-limiting examples of natural light sources include sunlight, moonlight, starlight, twilight, lightning, and firelight.

In the present description, the term "solid-state light emitter" refers to any light-emitting device that converts electrical energy into electromagnetic radiation through the recombination of electronic carriers (*i.e*., electrons and holes) in a light emitting layer or region. The emitting layer or region can include, but is not limited to, silicon, silicon carbide, gallium nitride and/or other semiconductor materials, and may or may not include a substrate such as sapphire, silicon, silicon carbide and/or other microelectronic substrates. The solid-state light emitters can include both inorganic and organic light emitters, many of which are known to the skilled person and need not be described in detail herein. Non-limiting examples of types of solid-state light emitters include semiconductor light-emitting diodes (LEDs), semiconductor laser diodes, vertical cavity surface emitting lasers (VCSELs), other semiconductor light emitting devices or lamps, organic light-emitting diodes (OLEDs), and polymer light-emitting diode (PLEDs).

The expression "lighting scenario" is understood to refer to the generation of light, such as for illuminating purposes, according to predetermined optical characteristics (*e.g*., spectral content, intensity, polarization) that may, in some instances, change, vary or evolve over time during a given time period. In other instances, the predetermined optical characteristics may remain constant, unchanged or not significantly evolve over time, during a given duration or period, (*e.g*., during a cycle or a portion of the lighting scenario). The embodiments wherein the optical characteristics change, vary or evolve over time may sometimes be referred to as "dynamic lighting scenario". The embodiments wherein the optical characteristics remain constant, unchanged or not significantly evolve may sometimes be referred to as "static lighting scenario". The expression "lighting scenario", which will be used throughout the present description, encompasses both variants, *i.e*., a dynamic lighting scenario and a static lighting scenario, as well as any combinations thereof. The optical characteristics of the generated light may correspond to or emulate those of natural lighting conditions. The natural light may emulate or be inspired from the actual light conditions experienced at a specific geographical location, date and time. It is appreciated that devising lighting scenarios that combine natural light conditions corresponding to different geographical locations is possible in some applications (*e.g*., a scenario could be build using sunrise, midday and sunset conditions corresponding to three distinct locations on Earth, at the same or different dates). In other embodiments, however, the natural light conditions may be different from real life conditions on Earth. By way of example, the spectrum of natural light generated according to the method described herein may differ from an actual spectral content of sunlight due to the absence of spectral components which are undesired or unnecessary in a given application context, or conversely by the enhancement or addition of wavelengths then are considered advantageous or required. The present techniques may rely on the use of solid-state light emitters. The solid-state light emitters can be driven to produce the lighting scenario using sets of control parameters. It should be noted that a plurality of lighting scenarios may be combined to collectively determine a "recipe" or a "recipe bundle". The recipe or the recipe bundle refers to a sequence of lighting scenarios. The present techniques apply to the generation of objectives-based lighting scenarios or objectives-based lighting recipes.

In some embodiments, the lighting scenario may emulate lighting conditions over the course of a day, from dawn to dusk, or over a portion of a day. Indeed, the spectral contents of light reaching a particular location on earth from the Sun is not constant as the day progress. In some instances, it can be customary to characterize natural light according to its Correlated Color Temperature (CCT) value, expressed in Kelvin (K). By convention, the CCT is defined by the CIE as "the temperature of the Planckian radiator whose perceived color most closely resembles that of a given stimulus at the same brightness and under specified viewing conditions" (CIE/IEC 17.4:1987, International Lighting Vocabulary). Lower CCT values correspond to "warmer" light. Hence, a day with a clear blue sky can begin at dawn with light in a warm CCT spectrum range, such as between 1500K and 3000K, then progress to about 5000K to 7500K at mid-day and return to the 1500K to 3000K range towards dusk. In horticultural or agricultural applications, the light conditions in a region of the world from which a cultivated produce originates or where this produce is known to thrive can be emulated (e.g., growing tomatoes using light conditions from a sunny day in June in Tuscany). In other examples, the lighting conditions may be adapted in view of observations or discoveries regarding optimal or enhanced lighting conditions for growing a given agricultural output, such as for example to follow the McCree Curve, which represents the average photosynthetic response of plants to light energy.

In the context of the current disclosure, the expression "pool of light sources" typically refers to a plurality of light sources, which may form a collection, a subcollection, a set, a subset, a group, a subgroup, a cluster, a subcluster, or any synonyms and derivatives thereof, of individual light sources. The pool may include any number of light sources. The light sources may be positioned according to any patterns or organized based on targeted needs and/or applications. The expression "pool of light sources" may refer to all the light sources present in a given location, or, alternatively, to only some of the light sources present in the location.

### Context

Artificial or supplemental lighting can be used in horticulture for several reasons. For instance, in many regions, natural sunlight may be insufficient or inconsistent for optimal plant growth during specific periods of the year, seasons, or in indoor settings. Supplemental lighting provides additional light and energy to support or assist photosynthesis and growth, as some plants require specific day lengths to initiate flowering or other developmental processes. Using artificial lighting, growers can artificially extend the photoperiod to manipulate the flowering time and control the growth cycle of plants. In indoor or controlled environment agriculture, such as vertical farms or greenhouse facilities, artificial lighting is essential and may act as the primary source of illumination. This allows growers to grow plants year-round, regardless of outdoor conditions. Artificial lighting ensures consistent light distribution across plants, overcoming shading effects and ensuring uniform growth. As different stages of plant growth require specific light spectra for optimal development, artificial lighting allows growers to tailor the light spectrum according to the needs of the plants, promoting healthy growth and enhancing traits such as flavor, color, and nutrient content.

Recent discoveries in higher plant photobiology have opened many modern use cases for horticultural lighting. New insights into plant photoreceptors and their responses to different wavelengths allow growers to fine-tune the light spectrum used in artificial lighting systems. By providing specific wavelengths to the plants, growers can optimize plant growth, flowering, contents levels, rooting and other developmental processes, leading to increased yields and improved quality. Advances in photobiology have enhanced our understanding of how plants respond to light stress, such as excess light or fluctuating light levels. This knowledge can help growers develop strategies to mitigate the negative effects of light stress on plant growth and productivity, improving crop resilience and performance. Detailed knowledge of photoperiodic signaling pathways and their regulation enables growers to manipulate plant flowering time and other photoperiodic responses. This capability is particularly valuable for crops with specific day length requirements or those grown in controlled environments where natural day-night cycles may be disrupted. Researchers have identified links between light quality and the synthesis of bioactive compounds in plants, such as antioxidants, vitamins, and flavonoids. By modulating light conditions, growers can potentially increase the nutritional content and health-promoting properties of crops, offering consumers more nutritious food options. Insights into the molecular mechanisms underlying plant responses to light stress can inform breeding programs aimed at developing crop varieties with enhanced stress tolerance. By selecting for traits associated with improved light stress resilience, breeders can produce cultivars better suited to challenging growing conditions, such as high-light environments or fluctuating light levels. Advances in photobiology contribute to the refinement of lighting strategies in CAE systems, such as vertical farms, hydroponic systems, and indoor grow facilities. By optimizing light intensity, spectrum, and duration, growers can maximize resource efficiency, reduce energy consumption, and achieve higher yields in controlled environments.

Lighting is also used in livestock rearing. Just like humans, many animals have internal biological clocks that regulate their physiological processes. Appropriate lighting generally helps synchronizing these circadian rhythms, promoting regular patterns of activity, rest, and feeding behavior. Consistent lighting schedules can improve animal welfare and reduce stress. Lighting influences the growth and development of animals by affecting hormone production and metabolic processes. For example, providing supplemental lighting to poultry can stimulate egg production and promote growth, leading to increased productivity in egg-laying hens and broilers. Light plays a crucial role in regulating reproductive behavior and fertility in livestock. Manipulating lighting conditions can be used to control breeding cycles, induce estrus in female animals, and optimize reproductive performance. This is particularly important in dairy farming, where synchronized calving can improve herd management and milk production efficiency. Inadequate lighting or irregular light cycles can lead to behavioral problems in livestock, such as aggression, feather pecking in poultry, or tail biting in pigs. Proper lighting management can help prevent these issues by promoting normal social interactions and reducing stress-related behaviors. Exposure to natural or artificial light is essential for maintaining the health and well-being of livestock. Adequate lighting levels are necessary for vision, which is crucial for feeding, drinking, and avoiding hazards in the environment. Additionally, exposure to natural daylight can support vitamin D synthesis in animals, contributing to bone health and overall immune function. In some livestock production systems, artificial lighting is used to extend the natural day length, especially in regions with short daylight hours or during certain seasons. By providing supplemental lighting, producers can optimize growth rates, reproductive performance, and overall productivity, thereby improving the efficiency of livestock operations.

Recent discoveries in animal photobiology offer valuable insights into the effects of light on livestock physiology, behavior, and productivity. By leveraging this knowledge, livestock producers can implement evidence-based lighting strategies to improve animal welfare, reproductive efficiency, growth performance, and product quality in diverse livestock production systems.

In addition to livestock and horticulture, several other types of agriculture could benefit from advances in photobiology, such as aquaculture, phytopharmaceuticals and algal biotechnology, to name a few.

In order to fully maximize or at least optimize the benefits of light, modern agriculture requires improved, granular control over the intensity and spectrum that is delivered from lighting fixtures to crop, livestock, and other lifeforms.

There are technologies aimed at addressing the objectives listed above, see for example US 10,149,364, which presents a system and method for generating light representative of a target natural light and EP4002957B1, which presents a light specifically for livestock rearing systems. Fully variable spectrum variable intensity, connected lighting technologies, dimming and spectrum adjustments, at various degrees of precision, may be achieved from a central location by standard or proprietary data communication technologies.

Despite that, a significant amount of legacy lighting technologies is still used within agricultural facilities. In many cases, the commercial trade offs favor the use of legacy fixed spectrum lighting.

In some situations, facilities may be equipped with dimmable fixed spectrum lighting. Dimming may be achieved by technologies such as legacy 0v-10v control, DALI (Digital Illumination Interface Alliance) or other standardized and proprietary protocols.

In other situations, intensity of non-dimmed fixed spectrum lighting is adjusted by turning off selected fixtures. This practice is known as a "checkerboard configuration". In these setups, multiple electrical circuits are used to selectively turn fixtures on and off to provide a coarse level of control of the total intensity.

In most cases, multiple technologies cohabit together within the facilities. For instance, in greenhouse environments, legacy HPS lighting will often cohabit with variable intensity LED lighting, allowing the grower to achieve spectrum and intensity closer to what's targeted. The operator will have some level of control over intensity by selectively turning on or off HPS circuits and dimming the LED fixtures.

In addition to technical restrictions resulting from technologies and configurations, the operator may be faced with dealing with multiple other objectives, which will be described in the following section.

### Objectives

In the context of horticulture, in addition to providing a photosynthetic light spectrum to the crop, a grower may also need to implement a light treatment during a specific moment of the day to address plant resistance against a pest infestation. The special treatment may partially compromise the photosynthetic spectrum, potentially having an impact on crop development. This is only one example of situations in which a grower has to simultaneously chase two relatively incompatible objectives.

As it is often the case, the grower may also be facing logistic constraints in operating the lighting system, for instance, with regards to facilities power consumption. Dealing with peak time grid tariffs, preventing potential penalties resulting from adverse effects to the grid, such as harmonics or rapid voltage changes, at the same time as managing biological objectives can become very complex for the grower. Other examples of logistic constraints include lamp lifetime management: legacy fixtures bulbs usage, faster degradation of LEDs of specific colors, etc.

When dealing with multiple lighting objectives, several challenges may arise to the operator. Often, different objectives may be incompatible or at least partially incompatible, which complicates the optimization of reaching distinct goals simultaneously. Achieving progress in one objective may come at the expense of another. Making trade-offs between competing objectives requires careful consideration and may involve sacrificing some goals to prioritize others. Managing multiple objectives adds complexity to the decision-making processes. It requires analyzing various factors, assessing their interrelationships, and understanding how changes in one objective may affect others. Limited resources and risk management are other aspects contributing to the complexity.

Most importantly, the operator needs to be able to focus on their expertise. Agronomists, farmers, and other agriculture operators do not have a deep understanding of optics or how light sources operate. They most likely do not have the required knowledge to design complex purpose-built light scenarios at the spectrum's power distribution level.

Considering this, in the context of agriculture, there is a need for a system to enable operators to meet their objectives while abstracting the technical heterogeneity of lighting configurations and the complexity of designing complex lighting scenarios, facilitating objective-based construction and control of simple to complex lighting scenarios, aimed at being rendered by a wide range of federated lamp fixtures technologies with variable capabilities. The system should be able to orchestrate the rendering of the light by a pool of fixtures with disparate capabilities and limitations in a way that the best possible fidelity is rendered, given the lamp pool limitations.

Different groups of objectives will now be presented, namely: photobiological response of primary targets, photobiological response of secondary targets, specific and adjoining. Of course, these groups of objectives serve an illustrative purpose only, and other objectives or groups of objectives could be selected, depending on the targeted applications or needs.

The objectives forming the group of photobiological response of primary targets may include, in the context of crops, optimizing photosynthesis (*i.e.*, strategies to optimize plant growth), photomorphogenesis (*i.e*., strategies to influence traits such as stem elongation, leaf expansion, flowering time, and fruit ripening), stress response (*i.e.*, strategies to help plants tolerate and adapt to stressful conditions, potentially enhancing crop resilience and productivity in challenging environments), floral induction (*i.e*., strategies to manipulate flowering times for optimal production and marketing), primary metabolite production (*i.e*., strategies to influence aspects involved in in growth, plant development, or reproduction, carbohydrates, proteins, and lipids), and secondary metabolite production (*i.e*., strategies to influence aspects such as flavor compounds in herbs and medicinal compounds in certain crops, vitamin content, alkaloids, terpenoids, phenolics, glycosides, essential oils, allyl sulfides and glucosinolates). In the context of livestock, this group may include regulation of circadian rhythm (*i.e*., strategies for optimizing light exposure can help synchronize the internal clocks of livestock, promoting health and productivity), enhanced growth and reproduction (*i.e.*, strategies to influence the growth rates and reproductive performance of livestock species. For example, providing specific light schedules can stimulate early sexual maturity in poultry and improve reproductive efficiency in mammals), improvement of welfare and behavior (*i.e.*, strategies to reduce aggressive behavior, improve feeding and drinking behaviors, and decrease instances of feather pecking and tail biting in poultry and other animals), optimization of product quality (*i.e*., strategies to impact the quality of animal products such as meat, milk, and eggs), control of reproductive cycle (*i.e.*, strategies to control the reproductive cycles of livestock, facilitating management practices such as estrus synchronization and breeding programs), and management of seasonal breeding (*i.e.*, strategies for more flexible reproductive management and increased production efficiency in species with seasonal breeding patterns). For other lifeforms, this group may include strategies for steering mycelium growth and morphology or stimulating fruiting body formation in fungus, strategies for stimulating biofuel production or nutritional supplements and pharmaceuticals synthesises in algae, strategies for promoting growth and reproduction, or fish color enhancement in aquaculture.

The objectives forming the group of photobiological response of secondary targets may include pollinators (*i.e*., strategies for facilitation of pollination by optimizing discovery, approach, landing and controlling bees' retention time at given location), pests in the context of horticulture (*i.e*., strategies to inhibits pest reproduction, activity levels and control), natural enemies in the context of horticulture (*i.e*., strategies to optimize natural enemies' propagation, concentration and sparsity, activity levels and population control), and algal in the context of aquaculture (*i.e*., strategies for facilitating algal reproduction in aquaculture as a source of live feed for fish larvae and juveniles).

The group of specific objectives provides guidance and directives aimed at directly shaping light quality and quantity. Some non limitative examples are photoperiod duration, intensity, expressed in luminous flux (Φ), illuminance (E), luminance (L), intensity (I), gallilux or PPFD (photosynthetic photon flux density) expressed in µmol, intensity expressed as a target over a period of time extending outside the photoperiod, for instance achieving a certain daily light integral (DLI) over *n* days, and spectral composition, expressed in any combinations of red, green, blue and far red (RGBFR) combinations, in specific wavelengths (specific bins ranges), color rendering index (CRI), correlated color temperature (CCT) or targeting reproduction of a geo-localized natural day for at a given time of the year and day.

The adjoining objectives may include energy management (*i.e*., strategies for managing power consumption, grid and co-generation orchestration, and related adverse effects into the grid, such as on peak management, grid load shedding, rates schedule, avoiding or lowering adverse effects such as rapid voltage changes (RVC) and harmonics on electrical supply grids. Load shedding, adverse effects and some strategies are discussed in US 17/865,817, US 17/865,830 and EP 4260683A1)*,* energy use expressed as a target over a period of time extending outside the photoperiod, for instance achieving a certain energy consumption or savings over n days, carbon emissions management (*i.e*., strategies for managing carbon emissions through power consumption and grid and co-generation), light pollution management (*i.e*., strategies for managing the impact of light propagated outside the grow environment, including light quality, light quantity and regulations schedules), and lamp lifetime management (*i.e*., strategies for optimizing lamp lifetime, including bulbs lifetime through underdriving/overdriving, selected power/colors management for improved LED's lifetimes, fixture internal heat management, power supply lifetime).

Each objective can be seen as a building block which can be combined with other objective(s), according to their own rules, and collectively forming an objective-based lighting scenario or an objective-based recipe.

In its simplest form, an objective-based recipe can include a selection of a specific wavelength and intensity, a specific spectrum power distribution (SPD), a sequence of SPD alternating over a certain period of time, a mathematical function, a set of computer instructions, aimed at describing the spectral quality, quantity and sequence and other properties required to reach the desired illumination conditions.

Metadata can also be associated with the objective-based recipe, such as intra photoperiod schedule, objective recipe duration, conditional logic and triggers. Such metadata will be used to control how the objective-based recipes are combined together initially and how it will behave during execution.

Once the objectives are selected and prioritized (or organized), they are combined together to form a resulting light scenario representative of the objective's relative weights, and actual physical lighting configuration.

In accordance with one aspect, there is provided a system for adjusting illumination conditions provided by a pool of light sources. The adjustments made to the illumination conditions are based on one or more objectives having been previously described, hence enabling the possibility of generating objectives-based light recipes or scenarios. The system is connectable to the pool of light sources through appropriate components and protocols. The system includes a light scenario generation module, a rendering module, and a user interface. Each component of the system will now be described in greater detail.

The light scenario generation module is operatively connected to the user interface and is configured to receive a first set of inputs. The first set of inputs includes at least one light scenario objective and a light capabilities profile for each light source of the pool of light sources. In some embodiments, only one light scenario objective is provided to the light scenario generation module through the user interface. In other embodiments, a plurality of light scenario objectives is provided to the light scenario generation module. In these embodiments, the light scenario generation module may be configured to process data relative to the individual importance or weight of each of the light scenario objectives. Once the data has been processed, the light scenario objectives can be ranked, so as to prioritize a given objective instead of the others. The ranking of the light scenario objectives may be based on an emergency level of an objective, a preference of the grower, or any criteria influencing the target, which may be a plant, a crop, or an animal.

In some embodiments, the light scenario objectives may be processed or organized using a dedicated module, separate from the light scenario generation module.

In some embodiments, the organization, classification and/or ranking of the light scenario objectives are fully automated. In other embodiments, the organization, classification and/or ranking of the light scenario objectives are semi-automated, meaning that a human's intervention may sometimes be required.

Once the light scenario objectives and the light capabilities profiles have been processed, a light scenario is pushed towards the rendering module.

In some embodiments, the system is configured to provide the user with a numerical indication of how the light scenario objectives have been achieved or not. This feature can be useful to explore different sets of light scenario objectives or compare different lighting approaches or technologies. In these embodiments, the system provides a "matching score" of the result, which may be influenced by the lighting technology being used. In this way, the user can see potential limitations of a particular technology or impacts of other factors. The matching score can be computed using the light scenario generation module, the rendering module, a dedicated module, or any combinations thereof.

The rendering module operatively connected to the pool of light sources and the light scenario generation module. The rendering module is configured to receive a second set of inputs. The second set of inputs includes the light scenario and the light capabilities profiles of the light sources.

The rendering module is configured to send illumination instructions to each light source of the pool of light sources. The illumination instructions cause an adjustment of the illumination conditions provided by the pool of light sources, based on the light scenario objectives having been previously defined.

The user interface is configured to provide the light scenario objective(s) to the light scenario generation module. In some embodiments, the user interface may be a graphical user interface. The user interface is operatively connected to at least one of the light sources through at least one controller to allow a user to interact with the light sources or the modules. In some embodiments, the user interface may be displayed on a display or a screen. In some embodiments, the graphical user interface may be part of a web-based application that may be accessed and displayed using a computing device connected to the Internet or any types of networks. In some embodiments, the user interface may allow the user to interact with the system using keywords matching and filters. In some embodiments, the user interface may be accessible programmatically, or through command line, conversational text or voice, or via the graphical user interface having been described.

In some embodiments, the system may include a memory, or may include or be connected to a database to store past, present or future light scenario objective(s). In some embodiments, the light scenario objectives may be provided in a dataset. The dataset may be stored as a relational database and may have a database format commonly used in the art, such as, for example and without being limitative, CSV/SCSV, SQL, NoSQL, Graph DB, Object Oriented DB, Tabular DB, Large Language Model (LLM), or the like. The dataset may comprise textual information, numeral information, time information, date information, image information, and any combinations thereof.

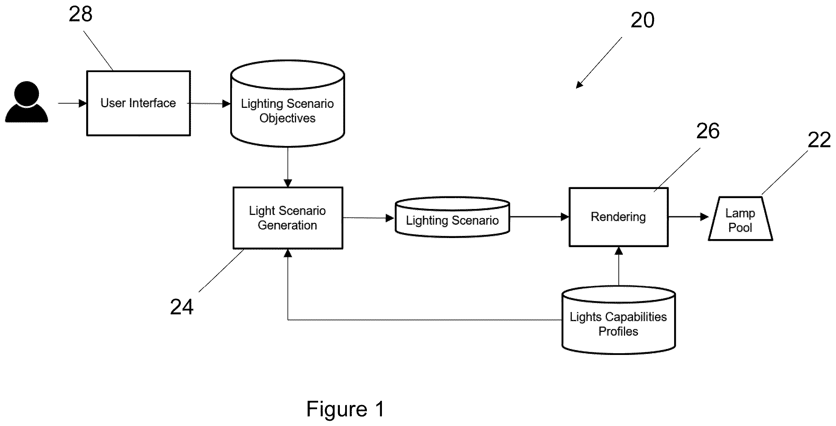

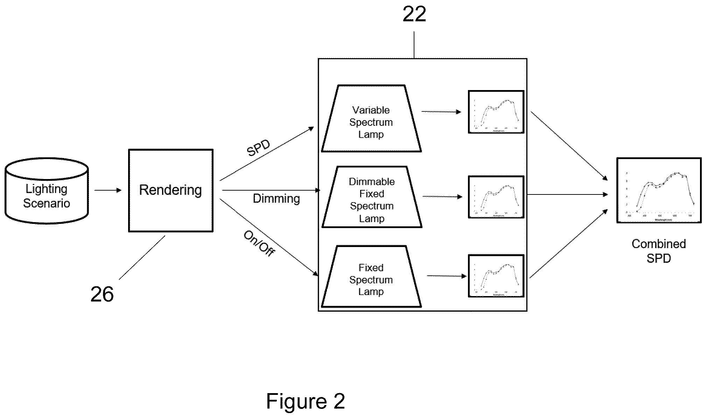

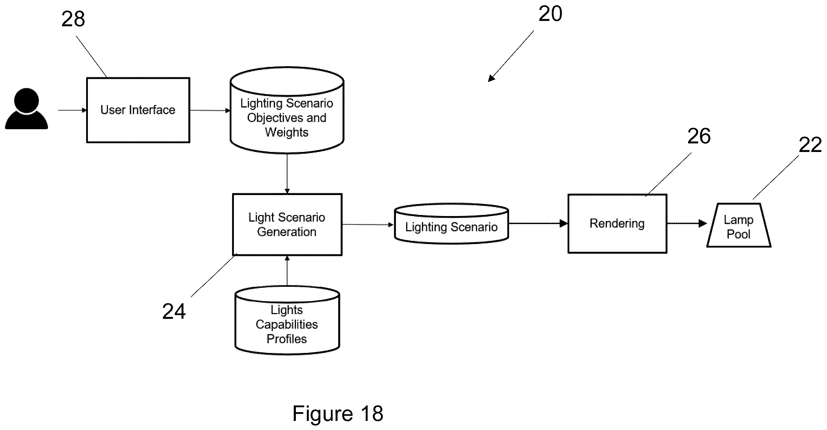

Embodiments of the system are illustrated in Figures 1, 2 and 18. As can be seen on Figure 2, the system allows simultaneously managing different types of light sources to provide combined illumination conditions based on the light scenario objective(s). The system 20 is connected to a lamp of light sources 22, and includes a light scenario generation module 24, a rendering module 26 and a user interface 28, similar to the ones having been previously described.

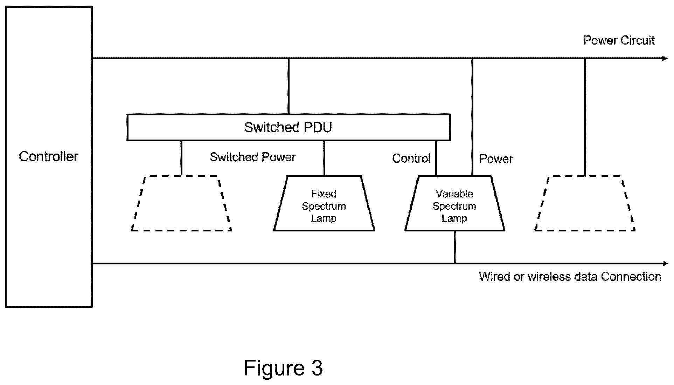

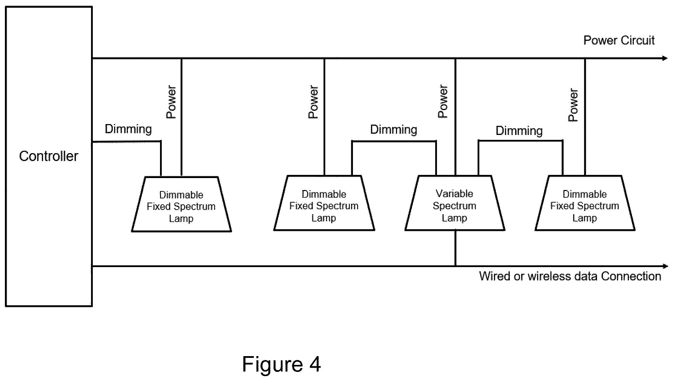

Figures 3 and 4 illustrate an example of a circuit connecting the light sources forming the pool of light sources.

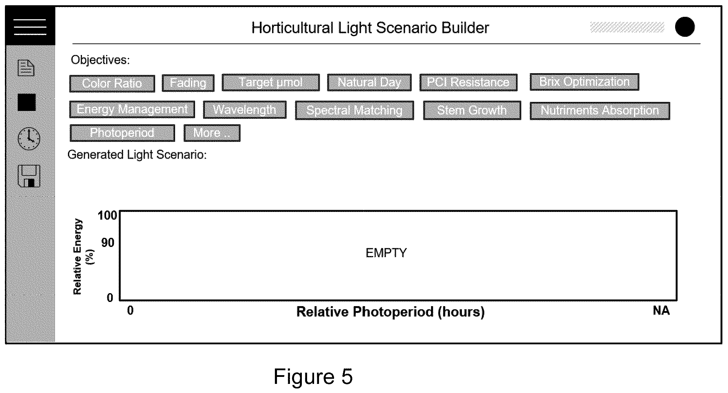

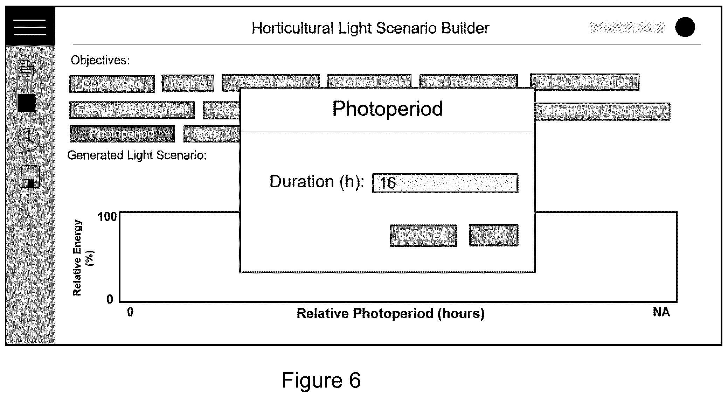

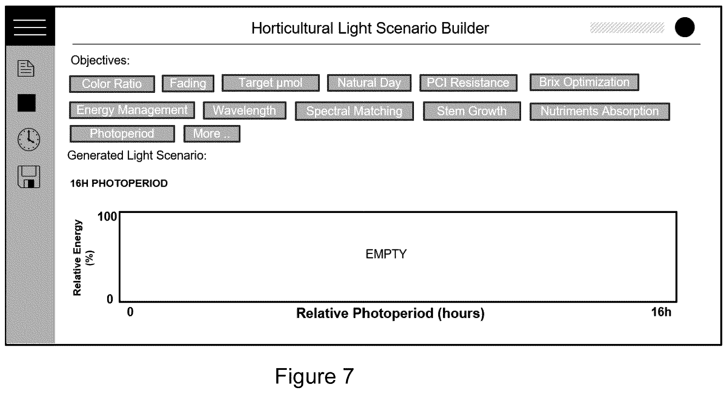

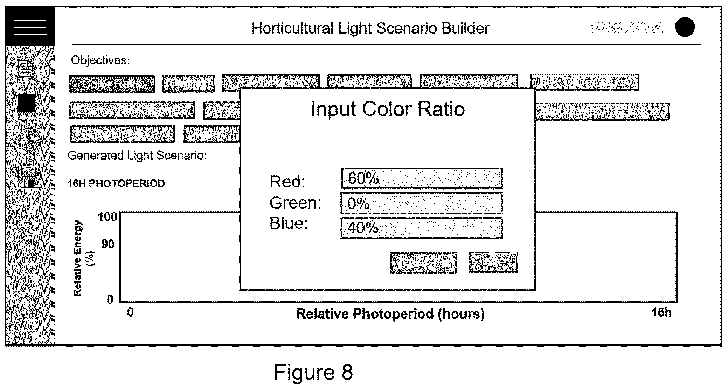

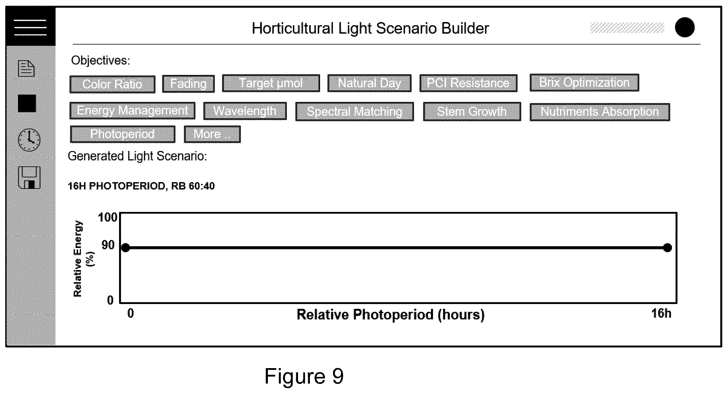

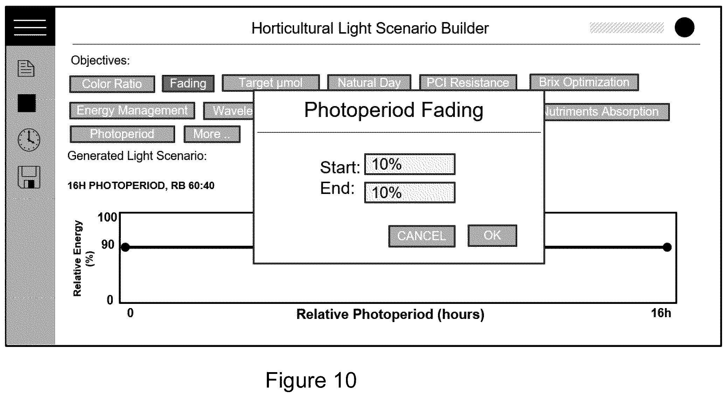

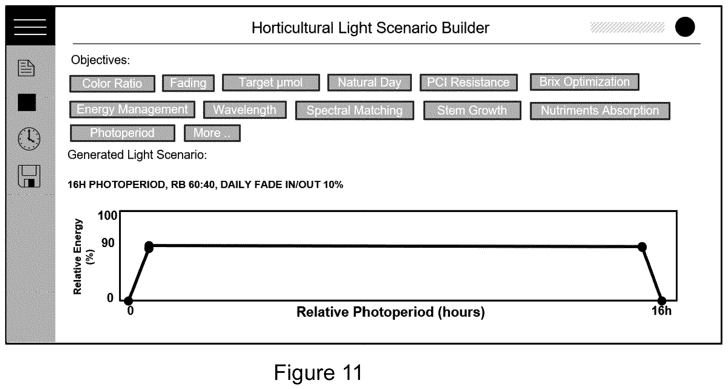

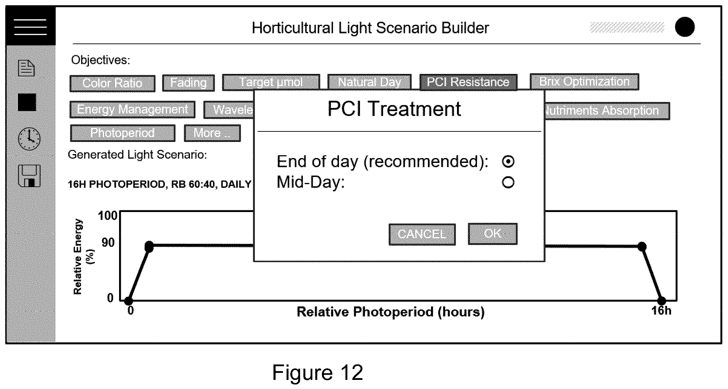

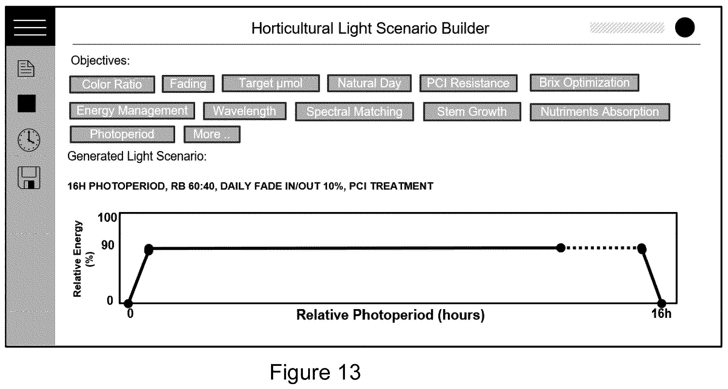

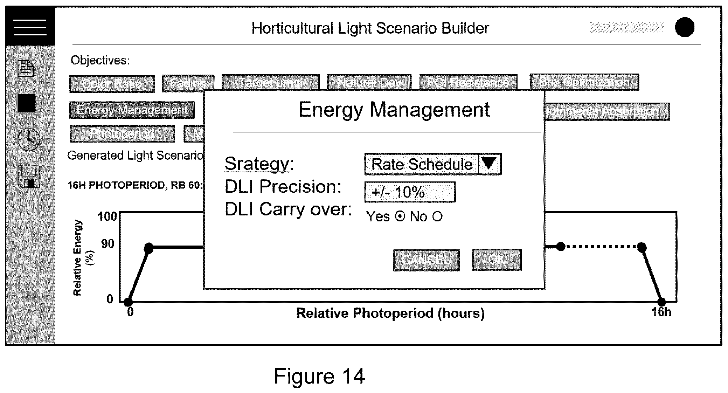

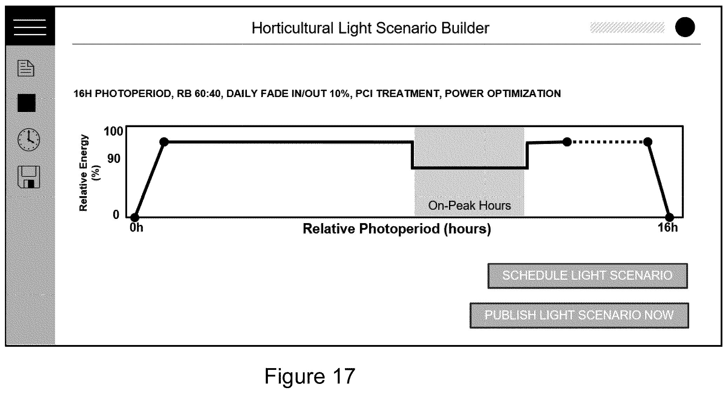

Now turning to Figures 5 to 17, there are illustrated different examples of how a user can interact with the user interface. Figure 5 shows an interface ready to be configured by a user. Figure 6 shows a determination of a photoperiod, and Figure 7 illustrates how the interface changes based on the selection of the duration of the photoperiod. Figure 8 shows a determination of the input color ratio, piling on the determination of the duration of the photoperiod. Figure 9 shows the relative energy for the given photoperiod. Figures 10 and 11 show how the relative energy can be faded (faded in and faded out). Figures 12 and 13 illustrate how a PCI treatment can be produced by the user. Figures 14 to 17 show how power optimization can be taken into account building the objectives-based light recipe.

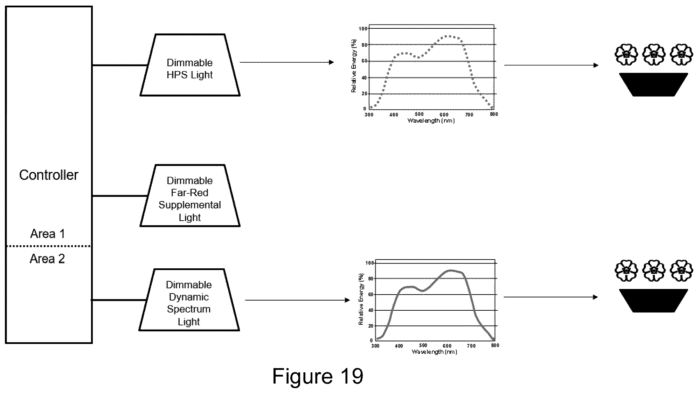

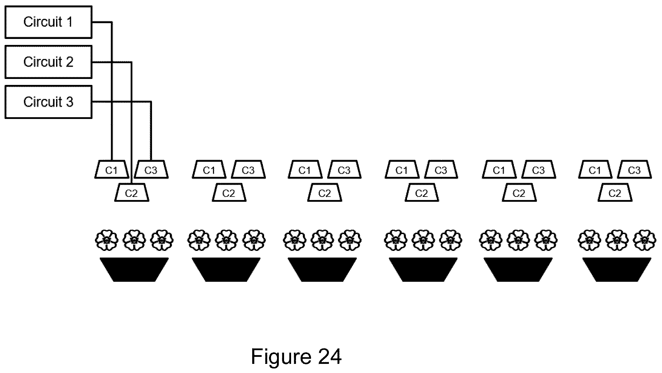

Figures 19 to 24 will be described in the context of the two examples provided elsewhere in the description.

The system having been described may be implemented in computer programs executed on programmable computers. A programmable computer generally includes at least a processor and a data storage system that may include volatile and non-volatile memory and/or storage elements. The programmable computer may be a programmable logic unit, a mainframe computer, server, and personal computer, cloud-based program or system, laptop, personal data assistance, cellular telephone, smartphone, wearable device, tablet device, virtual reality devices, smart display devices, set-top box, video game console, portable video game devices, or virtual reality device. In some embodiments, the systems and methods may be provided as a plug-in. In some embodiments, one or more components of the system having been described may be provided as a plug-in. The expression "plug-in" herein refers to a software component adding a predetermined feature or functionality to the system. Providing the different modules as plug-ins may be associated with some benefits, such as, for example and without being limitative, adaptability, modularity and flexibility.

Of note, the computer programs may be implemented in a high-level procedural or object-oriented programming and/or scripting language to communicate with a computer system. The programs could alternatively be implemented in assembly or machine language, if desired. In these implementations, the language may be a compiled or interpreted language. The computer programs are generally stored on a storage media or a device readable by a general or special purpose programmable computer for configuring and operating the computer when the storage media or device is read by the computer to perform the procedures described herein. In some embodiments, the systems may be embedded within an operating system running on the programmable computer.

In accordance with another aspect, there is provided a method for adjusting illumination conditions provided by a pool of light sources. The method includes providing, with a user interface, at least one light scenario objective; receiving, with a light scenario generation module, a first set of inputs, the first set of inputs comprising said at least one light scenario objective and a light capabilities profile for each light source of the pool of light sources; providing a light scenario with the light scenario generation module; receiving, with a rendering module, a second set of inputs, the second set of inputs comprising the light scenario and the light capabilities profile for each light source of the pool of light sources; and sending, with the rendering module, illumination instructions to each light source of the pool of light sources to adjust the illumination conditions provided by the pool of light sources, based on said at least one light scenario objective.

In accordance with another aspect of the present description, there is provided a non-transitory computer readable storage medium having stored thereon computer executable instructions that, when executed by a processor, cause the processor to perform the methods that have been previously described. The non-transitory computer storage medium can be integrated to the systems or assemblies that have been described in the present description. The non-transitory computer storage medium could otherwise be operatively connected with the systems or assemblies. In the present description, the terms "computer readable storage medium" and "computer readable memory" are intended to refer to a non-transitory and tangible computer product that can store and communicate executable instructions for the implementation of various steps of the method disclosed herein. The computer readable memory can be any computer data storage device or assembly of such devices, including random-access memory (RAM), dynamic RAM, read-only memory (ROM), magnetic storage devices such as hard disk drives, solid state drives, floppy disks and magnetic tape, optical storage devices such as compact discs (CDs or CDROMs), digital video discs (DVD) and Blu-Ray^{™} discs; flash drive memory, and/or other non-transitory memory technologies. A plurality of such storage devices may be provided, as can be understood by those skilled in the art. The computer readable memory may be associated with, coupled to, or included in a computer or processor configured to execute instructions contained in a computer program stored in the computer readable memory and relating to various functions associated with the computer.

### Examples

Now that different embodiments of the technology have been described, some nonlimitative examples illustrating potential implementations of the techniques will be presented. It should be noted that these examples serve an illustrative purpose only and should therefore not be considered limitative.

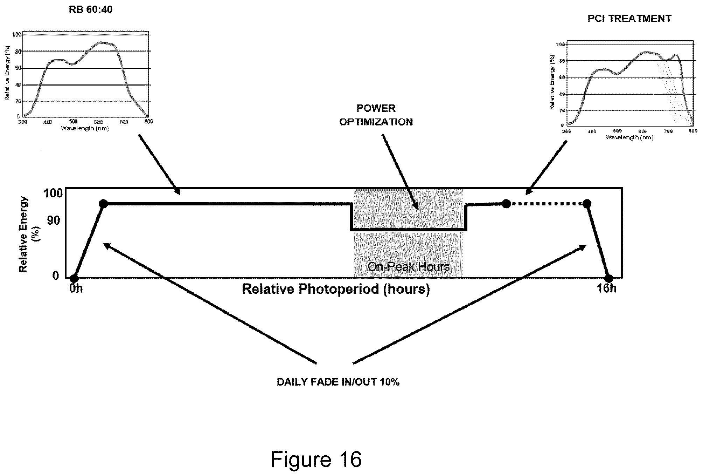

The first example relates to an application in an industrial greenhouse. The industrial greenhouse operation includes two sections: a first area equipped with HPS lighting assisted by supplemental far-red lighting, and a second area equipped with dimmable dynamic spectrum lighting fixtures. In the first area, the connected HPS lighting provides dimmable light having a fixed spectrum. The HPS lighting is complemented with a connected dimmable supplemental LED lighting configured for generating far-red wavelengths, within the 700-750 nm range. The HPS lighting is typically used to provide the basic photosynthetic light and the dimmable far-red LED fixture is typically used on an ad hoc basis, when additional far-red light is required (see for example Figure 16). The second area includes connected dimmable variable spectrum LED lighting capable of rendering a wide array of spectrum combinations, such as the one described in WO 202009773, including far-red wavelengths, within the 700-750 nm range (see for example Figure 16).

In the context of this first example, the agronomist needs to define a new light scenario that corresponds to some objectives.

Firstly, the agronomist wishes to achieve a specific red-blue color ratio known as being optimal for the growth of the target crop (e.g., bell peppers), within the facilities.

Facilities policies require progressive build-up and decrease of light intensity. Progressive changes are easier to handle and less visually disturbing for the human workers that may be present within the factory.

In previous growth periods, the facility has experienced episodes of phytophthora capsici infection (PCI). PCI is a disease that causes pre- and post-emergence damping-off, stem and vine blight, wilting and fruit rot. It was observed that far red light decreases pepper susceptibility to PCI. The grower would therefore like to provide a far-red light boost treatment. Such a treatment is believed to be more efficient when provided close to the end of the photoperiod.

The grower would further confirm that the power consumption complies with the utility grid rates. The current electric power utility rates schedule gives penalties if a determined load threshold is measured between 16h30 and 18h30.

With those objectives in mind, the grower engages with the lighting system control interface to generate the ideal light recipe aimed at satisfying the objectives presented above. The lighting system control interface presents the end user with a list of potential objectives alongside a photoperiod visualization panel (see for example Figure 5).

In this example, the grower selects the desired objectives (photoperiod, color ratio as base illumination spectrum, daily fade in and fade out, palliative and power optimization) and inputs parameters related to each objective when required (see for example Figures 6 to 15).

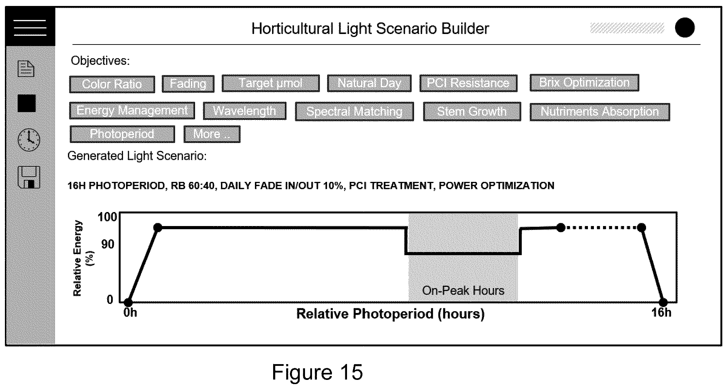

Some objectives may have a specific effect on the scenario timeline, for instance, such as the PCI Treatment (see for example Figures 14 and 15), other objectives may have an impact on the overall light scenario, such as for instance power management, an objective that requires an increase in intensity prior and after the on-peak period as a trade-off for a decrease in intensity, and thus power usage, during on-peak period (see for example Figures 14 and 15).

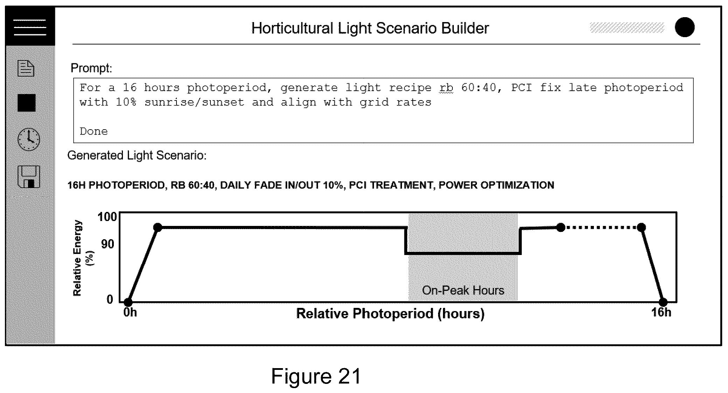

Alternatively, in another version of the user interface, the grower uses a conversational interface to provide the objectives to the system (see for example Figure 21).

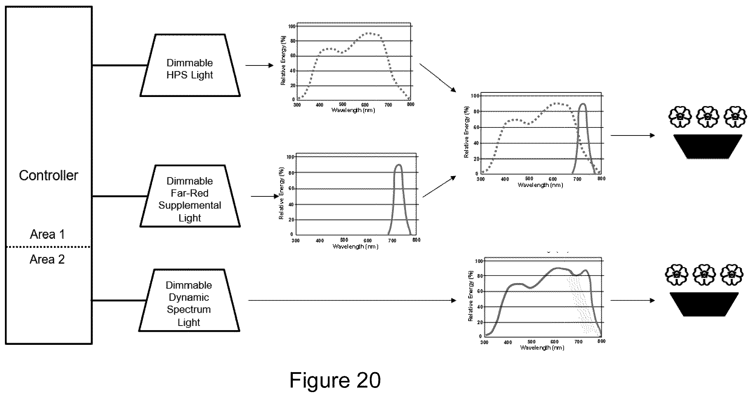

The resulting light scenario integrates all grower objectives (see for example Figure 20). The grower can then publish or schedule the light scenario to be rendered by the horticultural lighting present in the two areas.

The system then automatically uses the lights capabilities profiles to determine the lighting fixtures configuration specific to each area and their properties. Using this information, the system determines the best possible fixtures, intensities and spectrum combinations to produce the closest possible spectrum match.

For this specific facility during regular photosynthetic illumination, within the first area, the system determines that exclusively powering-up HPS fixtures will provide the closest possible match to the target spectrum. The second is equipped with a variable dynamic spectrum lighting system: in that case lighting fixtures can be provisioned with the target spectrum specification for achieving the closest possible match (see for example Figure 19).

During the PCI treatment timeframe, by using the lights capabilities profiles, the rendering module determines that an actual plant illumination spectrum closer to the target spectrum can be achieved by activating the supplemental far red LED lighting. Fixtures in the second area are provisioned with the target PCI treatment spectrum specification for achieving the closest possible match.

In this example, the system gave the opportunity to the agronomist to ignore the complexity involved in assembling a light scenario combining multiple objectives together and ignore the process of determining how to render the light scenario in the context of the physical constraints of its given installation.

The second example relates to the management of animals, such as chickens. Chickens are very sensitive to light. They perceive light through their eyes and through the thinner parts of their skull. Among other aspects, light is what signals a chicken to lay eggs. Seasonal daylight and duration influence egg production. Specific colors also have demonstrated to influence eggs size, shape, and quantity.

In this example, a free run eggs farm operation is equipped with dimmable and non-dimmable poultry-specific LED lights, engineered for poultry vision.

The light pool is powered by three electrical circuits that are individually controlled by the system: every first light is on the first circuit, every second light on the second circuit and every third light on the third circuit, forming a checkerboard lighting setup so that turning on or off a number of lights adjust the light levels. The dimmable lights are deployed on the second circuit and the non-dimmable lights are deployed on the first and third circuit (see for example

Figure 24).

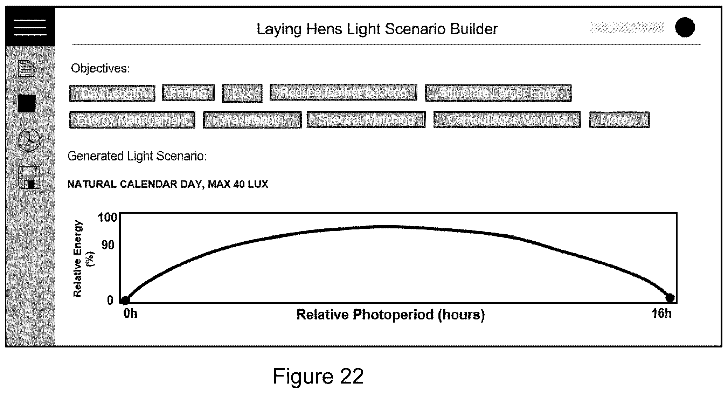

The agronomist needs to define a new light scenario that corresponds to certain objectives: achieving the intensity variation of a natural day and defining the total number of lux provided by the lighting system. The objectives are entered into the user interface (see for example Figure 22).

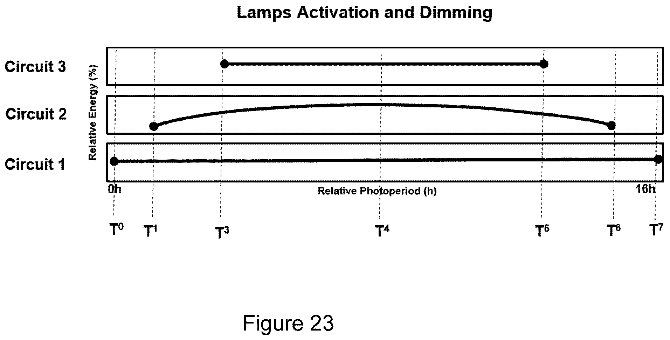

Based on the lights capabilities profiles, the system determines the best lights configuration, power-on, power-off and dimming sequence required to achieve the intensity variation, within the constraints of the installed fixtures capabilities (see for example Figure 23).

In that case, the first circuit is to be powered at T⁰, powering up a first set of non-dimmable lights, the second circuit at T¹, and initiating a dimming-up sequence on the dimmable fixtures, and finally the third circuit at T² to power the rest of the non-dimmable lights. A reverse sequence is initiated at T⁴.

In this example, the system gave the opportunity to the agronomist to abstract all of the complexity involved in assembling a light scenario combining multiple objectives together and to abstract the process of determining how to best render the light scenario in the context of the physical constraints of its installation.

Several alternative embodiments and examples have been described and illustrated herein. The embodiments described above are intended to be exemplary only. A person skilled in the art would appreciate the features of the individual embodiments, and the possible combinations and variations of the components. A person skilled in the art would further appreciate that any of the embodiments could be provided in any combination with the other embodiments disclosed herein. The present examples and embodiments, therefore, are to be considered in all respects as illustrative and not restrictive. Accordingly, while specific embodiments have been illustrated and described, numerous modifications come to mind without significantly departing from the present disclosure and the appended claims.

## Claims

1. A system for adjusting illumination conditions provided by a pool of light sources irradiating targets, the system comprising:
a light scenario generation module configured to:
receive a first set of inputs, the first set of inputs comprising at least one light scenario objective and a light capabilities profile for each light source of the pool of light sources; and
provide a light scenario as an output;
a rendering module operatively connected to the pool of light sources and the light scenario generation module, the rendering module being configured to:
receive a second set of inputs, the second set of inputs comprising the light scenario and the light capabilities profile for each light source of the pool of light sources; and
send illumination instructions to each light source of the pool of light sources to adjust the illumination conditions provided by the pool of light sources, based on said at least one light scenario objective; and
a user interface configured to provide said at least one light scenario objective to the light scenario generation module.

2. The system of claim 1, wherein the pool of light sources comprises different families of artificial light sources, at least one family of artificial light sources having different optical capabilities than at least one other family of artificial light sources.

3. The system of claim 1 or 2, wherein said at least one light scenario objective comprises at least one of: a photobiological response of primary targets objective and a photobiological response of secondary targets objective.

4. The system of any one of claims 1 to 3, wherein said at least one light scenario objective comprises at least one specific objective, said at least one specific objective being associated with optical properties and comprising at least one of: photoperiod duration, intensity, illuminance, luminance, photosynthetic photon flux density, daily light integral, spectral composition, color rendering index (CRI), correlated color temperature (CCT) and/or geo-localized based properties.

5. The system of any one of claims 1 to 4, wherein said at least one light scenario objective comprises at least one adjoining objective, said at least one adjoining objective comprising at least one of: energy management, energy usage management, carbon emissions management, light pollution management and/or lamp lifetime management.

6. The system of any one of claims 1 to 5, wherein said at least one light scenario objective comprises a plurality of light scenario objectives, the light scenario module being configured for:
processing data relative to an individual weight of each of the light scenario objectives; and
once the data has been processed, ranking the plurality of light scenario objectives to prioritize a given objective instead of the others.

7. The system of claim 6, wherein ranking the plurality of light scenario objectives is based on an emergency level of the given objective.

8. The system of any one of claims 1 to 7, wherein the user interface is configured to provide a matching score between said at least one light scenario objective and the illumination conditions provided by the pool of light sources, the matching score being an indication of an achievement of said at least one light scenario objective.

9. The system of any one of claims 1 to 8, wherein the targets comprise crops, plants and/or livestock.

10. A method for adjusting illumination conditions provided by a pool of light sources irradiating targets, the method comprising:
providing, with a user interface, at least one light scenario objective;
receiving, with a light scenario generation module, a first set of inputs, the first set of inputs comprising said at least one light scenario objective and a light capabilities profile for each light source of the pool of light sources;
providing a light scenario with the light scenario generation module;
receiving, with a rendering module, a second set of inputs, the second set of inputs comprising the light scenario and the light capabilities profile for each light source of the pool of light sources; and
sending, with the rendering module, illumination instructions to each light source of the pool of light sources to adjust the illumination conditions provided by the pool of light sources, based on said at least one light scenario objective.

11. The method of claim 10, wherein said at least one light scenario objective comprises at least one specific objective, said at least one specific objective being associated with optical properties of the light and comprising at least one of: photoperiod duration, intensity, illuminance, luminance, photosynthetic photon flux density, daily light integral, spectral composition, color rendering index (CRI), correlated color temperature (CCT) and/or geo-localized based properties.

12. The method of claim 10 or 11, wherein said at least one light scenario objective comprises at least one adjoining objective, said at least one adjoining objective comprising at least one of: energy management, energy usage management, carbon emissions management, light pollution management and/or lamp lifetime management.

13. The method of any one of claims 10 to 12, wherein said at least one light scenario objective comprises a plurality of light scenario objectives, the method comprising:
processing data relative to an individual weight of each of the light scenario objectives; and
once the data has been processed, ranking the plurality of light scenario objectives to prioritize a given objective instead of the others.

14. The method of claim 13, wherein ranking the plurality of light scenario objectives is based on an emergency level of the given objective.

15. The method of any one of claims 10 to 14, further comprising providing a matching score between said at least one light scenario objective and the illumination conditions provided by the pool of light sources, the matching score being an indication of an achievement of said at least one light scenario objective.
